# EUROPÄISCHE PATENTSCHRIFT

(11) **EP 3 580 251 B1**
(45) Veröffentlichungstag und Bekanntmachung des Hinweises auf die Patenterteilung: **21.12.2022**
(21) Anmeldenummer: 18704557.0
(22) Anmeldetag: 13.02.2018
(51) Int. Cl.: C08G 18/48, C08G 18/76, C08G 18/32, C08G 18/66

(54) **THERMOPLASTISCHES POLYURETHAN**
THERMOPLASTIC POLYURETHANE
POLYURÉTHANE THERMOPLASTIQUE

(30) Priorität: 13.02.2017 EP 17155799
(43) Veröffentlichungstag der Anmeldung: 18.12.2019
(73) Patentinhaber: BASF SE, 67056 Ludwigshafen am Rhein (DE)
(72) Erfinder: ROY, Nabarun, Wyandotte 48192 (US); POESELT, Elmar, 49448 Lemfoerde (DE); KEMPFERT, Dirk, 49448 Lemfoerde (DE); LAMMERS, Fin, 49448 Lemfoerde (DE)
(74) Vertreter: BASF IP Association
(86) Internationale Anmeldenummer: PCT/EP2018/053569
(87) Internationale Veröffentlichungsnummer: WO 2018/146335

(56) Entgegenhaltungen:
- EP-A1- 0 950 674
- EP-A2- 1 932 863
- US-A1- 2002 123 601
- US-A1- 2015 191 408
- -: "ISONATE 125M Pure MDI Product Information", , 1 March 2011 (2011-03-01), XP055540462, Retrieved from the Internet: URL:http://msdssearch.dow.com/PublishedLit eratureDOWCOM/dh_003f/0901b8038003f14f.pdf ?filepath=polyurethane/pdfs/noreg/026-0000 1.pdf&fromPage=GetDoc [retrieved on 2019-01-10]

## Beschreibung

Die vorliegende Erfindung betrifft thermoplastische Polyurethane erhältlich oder erhalten durch Umsetzung mindestens einer Polyisocyanatzusammensetzung, die 4,4'-MDI und mindestens ein weiteres Polyisocyanat enthält, mindestens eines Kettenverlängerers (KV1) der allgemeinen Formel (I), und mindestens einer Polyolzusammensetzung. Weiter betrifft die vorliegende Erfindung ein Herstellungsverfahren für derartige thermoplastische Polyurethane sowie die Verwendung eines erfindungsgemäßen thermoplastischen Polyurethans oder eines thermoplastischen Polyurethans erhältlich oder erhalten nach einem erfindungsgemäßen Verfahren zur Herstellung von Extrusionsprodukten, Filmen und Formkörpern.

Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden.

Beispielsweise WO 2006/082183 A1 offenbart ein Verfahren zur kontinuierlichen Herstellung thermoplastisch verarbeitbarer Polyurethan-Elastomeren, bei dem ein Polyisocyanat, eine Verbindung mit zerevitinoffaktiven Wasserstoffatomen mit einem mittleren Molekulargewicht von 450 g/Mol bis 5.000 g/Mol, ein Kettenverlängerer sowie weitere Hilfs- und Zusatzstoffe umgesetzt werden. Dabei werden durch eine spezielle Verarbeitung spezielle Eigenschaftsprofile erreicht.

Auch EP 0 922 552 A1 offenbart ein Verfahren zur kontinuierlichen Herstellung von Granulat aus thermoplastischen Polyurethan-Elastomeren, wobei zunächst durch Umsetzung von organischen Diisocyanaten, difunktionellen Polyhydroxylverbindungen mit Molekulargewichten von 500 bis 8000 und difunktionellen Kettenverlängerungsmitteln mit Molekulargewichten von 60 bis 400 in Gegenwart von Katalysatoren sowie gegebenenfalls Hilfsmittel und/oder Zusatzstoffen ein Granulat hergestellt wird. Die Verwendung zur Herstellung von Extrusions-, Spritzguss- oder Kalanderware, insbesondere von Kabelummantelungen, Schläuchen und/oder Folien wird ebenfalls offenbart.

WO 98/56845 offenbart ein thermoplastisches Polymer, das durch Umsetzung eines Polyisocyanats, einem Glykol als Kettenverlängerer und einem Polyetherpolyol erhalten wird. Es werden verschiedene Isocyanate, Kettenverlängerer und Polyole offenbart.

US 2002123601 A1 offenbart ein thermoplastisches Polyurethan, das durch die Umsetzung von einer Polyisocyanatzusammensetzung, zweier Kettenverlängerer sowie einem Polyetherpolyol erhalten wird. Die Verwendung als (spritz)gegossene oder extrudierte Artikel in Anwendungen wie z.B. Schläuchen oder Ummantelungen wird ebenfalls offenbart.

US 2015191408 A1 offenbart ein thermoplastisches Polyurethan, das durch die Umsetzung von einer Polyisocyanatzusammensetzung, Kettenverlängerer und PTMEG als Polyol erhalten wird. EP 0950674 A1 offenbart ein thermoplastisches Polyurethan, erhalten durch die Umsetzung von einer Polyisocyanatzusammensetzung, Kettenverlängerer wie beispielsweise HQEE, sowie einer Polyolzusammensetzung. Die Verarbeitung der TPUs zu Kabelummantelungen, Schläuche, Folien sowie zelligen bzw. geschäumten Produkten wird ebenfalls beschrieben.

EP 1932863 A2 offenbart ein thermoplastisches Polyurethan, erhalten durch die Umsetzung von einer Polyisocyanatzusammensetzung, Kettenverlängerer wie beispielsweise HQEE, sowie einer Polyolzusammensetzung.

Abhängig von der Art der Anwendung können die Eigenschaften des thermoplastischen Polyurethans durch die Art der Einsatzstoffe und die eingesetzten Mengenverhältnisse variiert werden. Beispielsweise durch Variation der Polyolkomponente kann die Stabilität beeinflusst werden. Auch durch die Verarbeitung, beispielsweise durch Tempern, kann die Stabilität beeinflusst werden. Durch Variation der Hartphasen können ebenfalls die mechanischen Eigenschaften sowie die Extrusionsqualität beeinflusst werden.

Häufig sind zwar die mechanischen Eigenschaften eines thermoplastischen Polyurethans optimiert, die Extrusionsqualität und damit verbunden auch die optischen Eigenschaften der erhaltenen Materialien aber gleichzeitig nicht ausreichend.

Ausgehend vom Stand der Technik lag eine der vorliegenden Erfindung zugrundeliegende Aufgabe demgemäß darin, verbesserte Materialien bereitzustellen, die neben zufriedenstellenden mechanischen Eigenschaften auch eine gute Extrusionsqualität aufweisen.

Erfindungsgemäß wird diese Aufgabe gelöst durch ein thermoplastisches Polyurethan erhältlich oder erhalten durch Umsetzung mindestens der Komponenten (i) bis (iii):
(i) mindestens eine Polyisocyanatzusammensetzung;
(ii) mindestens ein Kettenverlängerer der allgemeinen Formel (I), 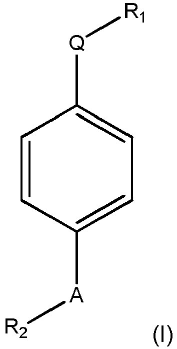 wobei A ausgewählt ist aus O, N(R3), S, CH₂,
   Q ausgewählt ist aus O, N(R3), S, CH₂,
   R1 ausgewählt ist aus CH₂-(CH₂)ₙ-OH, CH(CH₃)-CH₂-OH, OH,
   R2 ausgewählt ist aus CH₂-(CH₂)ₙ-OH, CH(CH₃)-CH₂-OH, CH₂-CH(CH₃)-OH, OH,
   n ist 0, 1, 2, 3, 4, 5, oder 6,
   R3 ausgewählt ist aus CH₃, CH₂-CH₃,
   und A und Q nicht gleichzeitig CH₂ sind,
(iii) mindestens eine Polyolzusammensetzung,

wobei die Polyisocyanatzusammensetzung 4,4'-Diphenylmethandiisocyanat (4,4'-MDI) und mindestens ein weiteres Polyisocyanat enthält,
wobei die Polyolzusammensetzung ein Polyol ausgewählt aus der Gruppe bestehend aus Polytetrahydrofuranen mit einem zahlenmittleren Molekulargewicht Mn im Bereich von 500 g/mol bis 5000 g/mol enthält.

Überraschend wurde gefunden, dass durch die erfindungsgemäße Kombination der Komponenten (i) bis (iii) thermoplastische Polyurethane erhalten werden konnten, die neben guten mechanischen Eigenschaften auch eine verbesserte Extrusionsqualität aufweisen. Insbesondere weisen die erfindungsgemäßen thermoplastischen Polyurethane einen verbesserten Druckverformungsrest auf. Weiterhin sind auch die optischen Eigenschaften der erhaltenen Extrusionsprodukte, beispielsweise durch eine glattere Oberfläche, deutlich verbessert.

Erfindungsgemäß werden mindestens die Komponenten (i) bis (iii) umgesetzt. Als Kettenverlängerer (KV1) wird dabei erfindungsgemäß mindestens ein Kettenverlängerer der allgemeinen Formel (I) eingesetzt, 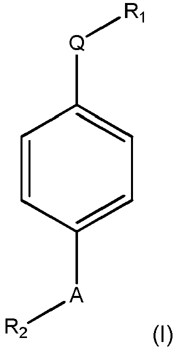 wobei A ausgewählt ist aus O, N(R3), S, CH₂, und Q ausgewählt ist aus O, N(R3), S, CH₂. Die Reste R1 und R2 sind Alkylreste, die optional OH-funktionalisiert sein können. Dabei ist R1 ausgewählt aus CH₂-(CH₂)ₙ-OH, CH(CH₃)-CH₂-OH, OH, und R2 ausgewählt aus CH₂-(CH₂)ₙ-OH, CH(CH₃)-CH₂-OH, CH₂-CH(CH₃)-OH, OH, wobei n 0, 1, 2, 3, 4, 5, oder 6 ist, und R3 ausgewählt ist aus CH₃, CH₂-CH₃. Dabei sind A und Q erfindungsgemäß nicht gleichzeitig CH₂.

Geeignete Verbindungen, die als Kettenverlängerer (KV1) der Formel (I) eingesetzt werden können, sind dem Fachmann an sich bekannt. Beispielsweise ist ein geeigneter Kettenverlängerer(KV1) Hydroquinone bis(2-hydroxyethyl)ether.

Gemäß einer weiteren Ausführungsform betrifft die vorliegende Erfindung daher auch ein thermoplastisches Polyurethan wie zuvor beschrieben, wobei der Kettenverlängerer(KV1) der allgemeinen Formel (I) Hydroquinone bis(2-hydroxyethyl)ether ist.

Erfindungsgemäß kann der Kettenverlängerer (KV1) der allgemeinen Formel (I) alleine eingesetzt werden. Es ist jedoch im Rahmen der vorliegenden Erfindung auch möglich, dass weitere Kettenverlängerer eingesetzt werden.

Im Rahmen der vorliegenden Erfindung ist es bevorzugt, wenn der Anteil des eingesetzten Kettenverlängerers (KV1) der allgemeinen Formel (I) an der Menge an eingesetztem Kettenverlängerer größer als 85 Mol% ist, bevorzugt größer als 90 Mol%, weiter bevorzugt größer als 95 Mol%, besonders bevorzugt größer als 98 Mol%, insbesondere bevorzugt größer als 99 Mol%.

Geeignete weitere Kettenverlängerer (KV2) sind beispielsweise Verbindungen, die mindestens zwei gegenüber Isocyanaten reaktive funktionelle Gruppen aufweisen, beispielsweise HydroxylGruppen, Amino-Gruppen oder Thiol-Gruppen. Gemäß einer weiteren Ausführungsform betrifft die vorliegende Erfindung demgemäß ein thermoplastisches Polyurethan wie zuvor beschrieben, wobei mindestens ein weiterer Kettenverlängerer (KV2) eingesetzt wird ausgewählt aus der Gruppe bestehend aus Verbindungen mit mindestens zwei gegenüber Isocyanaten reaktiven funktionellen Gruppen.

Als weitere Kettenverlängerer (KV2) geeignet sind beispielsweise Verbindungen, ausgewählt aus der Gruppe bestehend aus aliphatischen und aromatischen Diolen mit einem Molekulargewicht von <500 g/mol, bevorzugt <350 g/mol. Gemäß einer weiteren Ausführungsform betrifft die vorliegende Erfindung auch ein thermoplastisches Polyurethan wie zuvor beschrieben, wobei mindestens ein weiterer Kettenverlängerer (KV2) eingesetzt wird, ausgewählt aus der Gruppe bestehend aus aliphatischen und aromatischen Diolen mit einem Molekulargewicht von <500 g/mol, bevorzugt <350 g/mol.

Erfindungsgemäß bevorzugt werden als weitere Kettenverlängerer (KV2) Diole eingesetzt. Dabei können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,4-Butandiol, 1,6-Hexandiol.

Auch verzweigte Verbindungen wie 1,4-Cyclohexyldimethanol, 2-Butyl-2-ethylpopandiol, Neopentylglykol, 2,2,4-Trimethyl-1,3-pentanediol, Pinakol, 2-Ethyl-1,3-hexandiol, 1,4-Cyclohexandiol, oder N-Phenyldiethanolamin sind im Rahmen der vorliegenden Erfindung als Kettenverlängerer geeignet. Ebenfalls geeignet sind gemischte Verbindungen wie beispielsweise 4-Aminobutanol.

Erfindungsgemäß können auch weitere, d.h. ein dritter und/oder vierter Kettenverlängerer eingesetzt werden.

Erfindungsgemäß können auch Verbindungen mit Amino-Gruppen eingesetzt werden, beispielsweise Diamine. Ebenso können Gemische von Diolen und Diaminen eingesetzt werden.

Bevorzugt ist der weitere eingesetzte Kettenverlängerer (KV2) ein Diol mit einem Molekulargewicht Mw < 220 g/mol.

Gemäß einer Ausführungsform betrifft die vorliegende Erfindung ein thermoplastisches Polyurethan wie zuvor beschrieben, wobei mindestens ein weiterer Kettenverlängerer (KV2) ausgewählt aus der Gruppe bestehend aus aliphatischen und aromatischen Diolen, Diaminen und Aminoalkoholen eingesetzt wird.

Gemäß einer weiteren Ausführungsform betrifft die vorliegende Erfindung ein thermoplastisches Polyurethan wie zuvor beschrieben, wobei mindestens ein weiterer Kettenverlängerer (KV2) ausgewählt aus der Gruppe bestehend aus Monoethylenglykol, Aminopropanol, 1,4-Butandiol, und 1,6-Hexandiol eingesetzt wird.

Ebenso ist es im Rahmen der vorliegenden Erfindung gemäß einer weiteren Ausführungsform möglich, dass als weiterer Kettenverlängerer (KV2) eine Verbindung der allgemeinen Formel (II) eingesetzt wird: 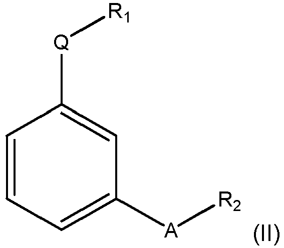 wobei A ausgewählt ist aus O, N(R3), S, CH₂,
Q ausgewählt ist aus O, N(R3), S, CH₂,
R1 ausgewählt ist aus CH₂-(CH₂)ₙ-OH, CH(CH₃)-CH₂-OH, OH,
R2 ausgewählt ist aus CH₂-(CH₂)ₙ-OH, CH(CH₃)-CH₂-OH, CH₂-CH(CH₃)-OH, OH,
n ist 0, 1, 2, 3, 4, 5, oder 6,
R3 ausgewählt ist aus CH₃, CH₂-CH₃.

Bevorzugt handelt es sich bei der Verbindung der allgemeinen Formel (II) um Resorcinol bis(2-hydroxyethyl)ether. Gemäß einer bevorzugten Ausführungsform der vorliegenden Erfindung wird als Kettenverlängerer (KV1) der Formel (I) Hydroquinone bis(2-hydroxyethyl)ether eingesetzt und als weiterer Kettenverlängerer (KV2) Resorcinol bis(2-hydroxyethyl)ether.

Bezogen auf die Gesamtmenge an Kettenverlängerer wird der weitere Kettenverlängerer (KV2) üblicherweise in einer Menge von 1 bis 50% eingesetzt, bevorzugt 5 bis 20%. Üblicherweise werden ein dritter und/oder vierter Kettenverlängerer in Mengen von weniger als 10% bezogen auf die Menge der eingesetzten Kettenverlängerer eingesetzt.

Im Rahmen der vorliegenden Erfindung kann die eingesetzte Menge des Kettenverlängerers und der Polyolzusammensetzung in weiten Bereichen variieren. Beispielsweise werden die Komponente (iii) und die Komponente (ii) in einem molaren Verhältnis von (iii) zu (ii) von 1 zu 0,7, 1 zu 2,7 und 1 zu 7,3 eingesetzt.

Erfindungsgemäß enthält die Polyolzusammensetzung mindestens ein Polyol, wobei die Polyolzusammensetzung ein Polyol ausgewählt aus der Gruppe bestehend aus Polytetrahydrofuranen mit einem zahlenmittleren Molekulargewicht Mn im Bereich von 500 g/mol bis 5000 g/mol enthält. Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Ebenso können Polycarbonate eingesetzt werden. Auch Copolymere können im Rahmen der vorliegenden Erfindung eingesetzt werden. Das zahlenmittlere Molekulargewicht der erfindungsgemäß eingesetzten Polyole liegt vorzugsweise zwischen 0,5×10³g/mol und 8 ×10³ g/mol, bevorzugt zwischen 0,6 ×10³ g/mol und 5 ×10³ g/mol, insbesondere zwischen 0,8 ×10³ g/mol und 3 ×10³ g/mol.

Erfindungsgemäß sind Polyetherole geeignet, aber auch Polyesterole, Blockcopolymere sowie Hybrid Polyole wie z.B. Poly(ester/amid). Bevorzugte Polyetherole sind erfindungsgemäß Polyethylenglykole, Polypropylenglykole, Polyadipate, Polycarbonat(diol)e und Polycaprolacton.

Gemäß einer weiteren Ausführungsform betrifft die vorliegende Erfindung auch ein thermoplastisches Polyurethan wie zuvor beschrieben, wobei die Polyolzusammensetzung ein Polyol ausgewählt aus der Gruppe bestehend aus Polyetherolen, Polyesterolen, Polycaprolactonen und Polycarbonaten enthält.

Geeignete Blockcopolymere sind beispielsweise solche, die Ether und Esterblöcke aufweisen, wie beispielsweise Polycaprolacton mit Polyethylenoxid oder Polypropylenoxid-Endblöcken oder auch Polyether mit Polycaprolactonendblöcken. Bevorzugte Polyetherole sind erfindungsgemäß Polyethyleneglykole, Polypropylenglykole. Weiterhin bevorzugt ist Polycaprolacton.

Gemäß einer besonders bevorzugten Ausführungsform weist das eingesetzte Polyol ein Molekulargewicht Mn im Bereich von 500 g/mol bis 4000 g/mol auf, bevorzugt im Bereich von 800 g/mol bis 3000 g/mol.

Demgemäß betrifft die vorliegende Erfindung gemäß einer weiteren Ausführungsform ein thermoplastisches Polyurethan wie zuvor beschrieben, wobei mindestens ein in der Polyolzusammensetzung enthaltenes Polyol ein Molekulargewicht Mn im Bereich von 500 g/mol bis 4000 g/mol aufweist.

Erfindungsgemäß können auch Mischungen verschiedener Polyole eingesetzt werden. Bevorzugt haben die eingesetzten Polyole bzw. die Polyolzusammensetzung eine mittlere Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Erfindungsgemäß wird zur Herstellung des thermoplastischen Polyurethans mindestens eine Polyolzusammensetzung als Komponente (iii) eingesetzt, die mindestens Polytetrahydrofuran enthält. Erfindungsgemäß kann die Polyolzusammensetzung neben Polytetrahydrofuran auch weitere Polyole enthalten.

Erfindungsgemäß sind beispielsweise als weitere Polyole Polyether geeignet, aber auch Polyester, Blockcopolymere sowie Hybrid Polyole wie z.B. Poly(ester/amid). Geeignete Blockcopolymere sind beispielsweise solche, die Ether und Esterblöcke aufweisen, wie beispielsweise Polycaprolacton mit Polyethylenoxid oder Polypropylenoxid-Endblöcken oder auch Polyether mit Polycaprolactonendblöcken. Bevorzugte Polyetherole sind erfindungsgemäß Polyethyleneglykole, Polypropylenglykole. Weiterhin bevorzugt ist als weiteres Polyol Polycaprolacton.

Geeignete Polyole sind beispielsweise Polyetherole wie Polytrimethylenoxid oder Polytetramethylenoxid.

Demgemäß betrifft die vorliegende Erfindung gemäß einer weiteren Ausführungsform ein thermoplastisches Polyurethan wie zuvor beschrieben, wobei die Polyolzusammensetzung mindestens ein Polytetrahydrofuran und mindestens ein weiteres Polyol ausgewählt aus der Gruppe bestehend aus einem weiteren Polytetramethylenoxid (PTHF), Polyethylenglykol, Polypropylenglykol und Polycaprolacton enthält.

Erfindungsgemäß weist das Polytetrahydrofuran ein zahlenmittleres Molekulargewicht Mn im Bereich von 500 g/mol bis 5000 g/mol auf, weiter bevorzugt im Bereich von 550 bis 2500 g/mol, besonders bevorzugt im Bereich von 650 bis 2000 g/mol.

Die Zusammensetzung der Polyolzusammensetzung kann im Rahmen der vorliegenden Erfindung in weiten Bereichen variieren. Beispielsweise kann der Gehalt an dem ersten Polyol, bevorzugt an Polytetrahydrofuran im Bereich von 15 % bis 85 % liegen, bevorzugt im Bereich von 20 % bis 80 %, weiter bevorzugt im Bereich von 25 % bis 75 %.

Erfindungsgemäß kann die Polyolzusammensetzung auch ein Lösungsmittel enthalten. Geeignete Lösungsmittel sind dem Fachmann an sich bekannt.

Erfindungsgemäß liegt das zahlenmittlere Molekulargewicht Mn des Polytetrahydrofurans im Bereich von 500 g/mol bis 5000 g/mol, bevorzugt im Bereich von 500 bis 3000 g/mol. Weiter bevorzugt liegt das Molekulargewicht Mn des Polytetrahydrofurans im Bereich von 500 bis 1400 g/mol.

Erfindungsgemäß können auch Mischungen verschiedener Polytetrahydrofurane eingesetzt werden, d.h. Mischungen aus Polytetrahydrofuranen mit unterschiedlichen Molekulargewichten.

Gemäß einer weiteren Ausführungsform betrifft die vorliegende Erfindung daher auch ein thermoplastisches Polyurethan wie zuvor beschrieben, wobei die Polyolzusammensetzung ein Polyol (P1) ausgewählt aus der Gruppe bestehend aus Polytetrahydrofuranen mit einem zahlenmittleren Molekulargewicht Mn im Bereich von 1501 g/mol bis 3000 g/mol enthält und ein Polyol (P2) ausgewählt aus der Gruppe bestehend aus Polytetrahydrofuranen mit einem zahlenmittleren Molekulargewicht Mn im Bereich von 500 g/mol bis 1500g/mol.

Üblicherweise werden Mischungen eingesetzt, die ein Polytetrahydrofuran mit einem zahlenmittleren Molekulargewicht Mn im Bereich von 1501 g/mol bis 3000 g/mol in einer Menge im Bereich von 5 bis 30% enthalten und das Polytetrahydrofuran mit einem zahlenmittleren Molekulargewicht Mn im Bereich von 500 g/mol bis 1500g/mol in einer Menge im Bereich von 2 bis 50 %.

Erfindungsgemäß wird zur Herstellung des thermoplastischen Polyurethans eine Polyisocyanatzusammensetzung eingesetzt, die 4,4'-MDI und mindestens ein weiteres Polyisocyanat enthält.

Bevorzugte Polyisocyanate sind im Rahmen der vorliegenden Erfindung Diisocyanate, insbesondere aliphatische oder aromatische Diisocyanate, weiter bevorzugt aromatische Diisocyanate. Geeignete Isocyanate sind dem Fachmann an sich bekannt.

Erfindungsgemäß ist es auch möglich, dass die Isocyanatzusammensetzung 4,4'-Methylendiphenyldiisocyanat und mindestens ein weiteres Methylendiphenyldiisocyanat enthält. Dabei wird erfindungsgemäß unter dem Begriff Methylendiphenyldiisocyanat 2,2'-, 2,4'- und/oder 4,4'-Diphenylmethandiisocyanat verstanden oder ein Gemisch aus zwei oder drei Isomeren. Somit kann erfindungsgemäß als weiteres Isocyanat 2,2'- oder 2,4'-Diphenylmethandiisocyanat eingesetzt werden oder ein Gemisch aus zwei oder drei Isomeren. Erfindungsgemäß kann die Polyisocyanatzusammensetzung auch weitere Polyisocyanate enthalten.

Gemäß einer weiteren Ausführungsform betrifft die vorliegende Erfindung auch ein thermoplastisches Polyurethan wie zuvor beschrieben, wobei die Polyisocyanatzusammensetzung eine Mischung aus 4,4'-MDI und 2,4'-MDI enthält.

Des Weiteren können im Rahmen der vorliegenden Erfindung vorreagierte Produkte als Isocyanatkomponenten eingesetzt werden, bei denen ein Teil der OH-Komponenten in einem vorgelagerten Reaktionsschritt mit einem Isocyanat zur Reaktion gebracht werden. Die erhaltenen Produkte werden in einem nachfolgenden Schritt, der eigentlichen Polymerreaktion, mit den restlichen OH-Komponenten zur Reaktion gebracht und bilden dann das thermoplastische Polyurethan.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trime-thylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'-und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Geeignete aromatische Diisocyanate sind insbesondere 1,5-Naphthylendiisocyanat (NDI), 2,4-und/oder 2,6-Toluylendiisocyanat (TDI), 3,3,'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethandiisocyanat und/oder Phenylendiisocyanat.

Besonders geeignet sind im Rahmen der vorliegenden Erfindung beispielsweise Polyisocyanatzusammensetzungen enthaltend 4,4'-MDI und 2,4-MDI, Polyisocyanatzusammensetzungen enthaltend 4,4'-MDI und 3,3,'-Dimethyl-4,4'-Diisocyanato-Diphenyl (TODI) oder Polyisocyanatzusammensetzungen enthaltend 4,4'-MDI und 1,5-Naphthylendiisocyanat (NDI).

Erfindungsgemäß können auch drei oder mehr Isocyanate eingesetzt werden. Üblicherweise enthält die Polyisocyanatzusammensetzung 4,4'-MDI in einer Menge von 2 bis 50% bezogen auf die gesamte Polyisocyanatzusammensetzung und das weitere Isocyanat in einer Menge von 3 bis 20% bezogen auf die gesamte Polyisocyanatzusammensetzung.

Bevorzugte Beispiele für höherfunktionelle Isocyanate sind Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurethe der vorgenannten Diisocyanate, ferner Oligomere, die durch gezielte Umsetzung von semiblockierten Diisocyanaten mit Polyolen, die im Mittel mehr als zwei und vorzugsweise drei oder mehr Hydroxy-Gruppen aufweisen, erhältlich sind.

Erfindungsgemäß kann die Polyisocyanatzusammensetzung auch ein oder mehrere Lösungsmittel enthalten. Geeignete Lösungsmittel sind dem Fachmann bekannt. Geeignet sind beispielsweise nicht reaktive Lösungsmittel wie Ethylacetat, Methylethylketon und Kohlenwasserstoffe.

Weiter können im Rahmen der vorliegenden Erfindung auch Vernetzer eingesetzt werden, beispielsweise die zuvor genannten höherfunktionellen Polyisocyanate oder Polyole oder auch andere höherfunktionale Moleküle mit mehreren gegenüber Isocyanaten reaktiven funktionellen Gruppen. Ebenso ist es im Rahmen der vorliegenden Erfindung möglich, eine Vernetzung der Produkte durch einen Überschuss der eingesetzten Isocyanatgruppen im Verhältnis zu den Hydroxylgruppen zu erreichen.

Erfindungsgemäß werden die Komponenten (i) bis (iii) in einem Verhältnis eingesetzt, so dass das molare Verhältnis aus der Summe der Funktionalitäten der eingesetzten Polyolzusammensetzung und Kettenverlängerer zu der Summe der Funktionalitäten der eingesetzten Isocyanatzusammensetzung im Bereich von 1 zu 0,8 bis 1 zu 1,3 liegt. Bevorzugt liegt das Verhältnis im Bereich von 1 zu 0,9 bis 1 zu 1,2, weiter bevorzugt im Bereich von 1 zu 0,965 bis 1 zu 1,11, weiter bevorzugt im Bereich von 1 zu 0,97 bis 1 zu 1,11, weiter bevorzugt im Bereich von 1 zu 0,97 bis 1 zu 1,05, besonders bevorzugt im Bereich von 1 zu 0,98 bis 1 zu 1,03.

Gemäß einer weiteren Ausführungsform betrifft die vorliegende Erfindung ein thermoplastisches Polyurethan wie zuvor beschrieben, wobei das molare Verhältnis aus der Summe der Funktionalitäten der eingesetzten Polyolzusammensetzung und Kettenverlängerer zu der Summe der Funktionalitäten der eingesetzten Isocyanatzusammensetzung im Bereich von 1 zu 0,8 bis 1 zu 1,3 liegt.

Eine weitere Größe, die bei der Umsetzung der Komponenten (i) bis (iii) berücksichtigt wird, ist die Isocyanat-Kennzahl. Hierbei ist die Kennzahl definiert durch das Verhältnis der insgesamt bei der Umsetzung eingesetzten Isocyanatgruppen der Komponente (i) zu den Isocyanat-reaktiven Gruppen, also insbesondere den Gruppen der Komponenten (ii) und (iii). Bei einer Kennzahl von 1000 kommt auf eine Isocyanatgruppe der Komponente (i) ein aktives Wasserstoffatom. Bei Kennzahlen über 1000 liegen mehr Isocyanatgruppen als Isocyanat-reaktiven Gruppen vor. Bevorzugt liegt die Kennzahl bei der Umsetzung der Komponenten (i) bis (iii) im Bereich von 965 bis 1110, beispielsweise im Bereich von 970 bis 1110, weiter bevorzugt im Bereich von 970 bis 1050, besonders bevorzugt im Bereich von 980 bis 1030.

Gemäß einer weiteren Ausführungsform betrifft die vorliegende Erfindung ein thermoplastisches Polyurethan wie zuvor beschrieben, wobei die Kennzahl bei der Umsetzung im Bereich von 965 bis 1100 liegt.

Erfindungsgemäß können bei der Umsetzung der Komponenten (i) bis (iii) weitere Additive zugesetzt werden, beispielsweise Katalysatoren oder Hilfs- und Zusatzstoffe. Zusatzstoffe und Hilfsmittel sind dem Fachmann an sich bekannt. Erfindungsgemäß können auch Kombinationen aus mehreren Additiven eingesetzt werden.

Im Rahmen der vorliegenden Erfindung werden unter dem Begriff Additiv insbesondere Katalysatoren, Hilfsstoffe und Zusatzstoffe verstanden, insbesondere Stabilisatoren, Nukleationsmittel, Trennmittel, Entformungshilfen, Füllstoffe, Flammschutzmittel oder Vernetzer.

Geeignete Additive bzw. Zusatzstoffe sind beispielsweise Stabilisatoren, Nukleationsmittel, Füllstoffe wie z.B. Silikate oder Vernetzer wie z.B. mehrfunktionale Alumosilikate.

Gemäß einer weiteren Ausführungsform betrifft die vorliegende Erfindung demgemäß ein thermoplastisches Polyurethan wie zuvor beschrieben, wobei das thermoplastische Polyurethan mindestens ein Additiv enthält.

Als Hilfs- und Zusatzstoffe genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Bismuthverbindungen, wie Bismuthalkylverbindungen oder ähnliche, oder Eisenverbindungen, bevorzugt Eisen-(MI)-acetylacetonat oder die Metallsalze der Carbonsäuren wie z.B. Zinn-II-isooctoat, Zinndioctoat, Titansäureester oder Bismut-(III)-neodecanoat.

Gemäß einer bevorzugten Ausführungsform werden die Katalysatoren ausgewählt aus Zinnverbindungen und Bismuthverbindungen, weiter bevorzugt Zinnalkylverbindungen oder Bismuthalkylverbindungen. Besonders geeignet sind die Zinn-II-isooctoat und Bismuthneodecanoat.

Die Katalysatoren werden üblicherweise in Mengen von 0 bis 2000 ppm, bevorzugt 1 ppm bis 1000 ppm, weiter bevorzugt 2 ppm bis 500 ppm und am meisten bevorzugt von 5 ppm bis 300 ppm eingesetzt.

Die Eigenschaften der erfindungsgemäßen thermoplastischen Polyurethane können je nach Anwendung in weiten Bereichen variieren.

Üblicherweise liegt der Hartsegmentanteil in den erfindungsgemäßen thermoplastischen Polyurethanen im Bereich von 5 bis 70%, insbesondere im Bereich von 10 bis 50%, bevorzugt im Bereich von 15 bis 45%. Dabei wird im Rahmen der vorliegenden Erfindung der Hartsegmentanteil gemäß der in der WO 2007/118827 A1 offenbarten Formel bestimmt.

Gemäß einem weiteren Aspekt betrifft die vorliegende Erfindung auch ein Verfahren zur Herstellung eines thermoplastischen Polyurethans, umfassend die Umsetzung mindestens der Komponenten (i) bis (iii):
(i) mindestens eine Polyisocyanatzusammensetzung;
(ii) mindestens ein Kettenverlängerer (KV1) der allgemeinen Formel (I), 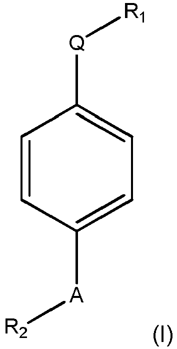 wobei A ausgewählt ist aus O, N(R3), S, CH₂,
   Q ausgewählt ist aus O, N(R3), S, CH₂,
   R1 ausgewählt ist aus CH₂-(CH₂)ₙ-OH, CH(CH₃)-CH₂-OH, OH,
   R2 ausgewählt ist aus CH₂-(CH₂)ₙ-OH, CH(CH₃)-CH₂-OH, CH₂-CH(CH₃)-OH, OH,
   n ist 0, 1, 2, 3, 4, 5, oder 6,
   R3 ausgewählt ist aus CH₃, CH₂-CH₃,
   und A und Q nicht gleichzeitig CH₂ sind,
(iii) mindestens eine Polyolzusammensetzung,

wobei die Polyisocyanatzusammensetzung 4,4'-MDI und mindestens ein weiteres Polyisocyanat enthält,
wobei die Polyolzusammensetzung ein Polyol ausgewählt aus der Gruppe bestehend aus Polytetrahydrofuranen mit einem zahlenmittleren Molekulargewicht Mn im Bereich von 500 g/mol bis 5000 g/mol enthält.

Bezüglich bevorzugter Ausführungsformen des Verfahrens, geeigneter Einsatzstoffe oder Mischungsverhältnisse wird auf die obigen Ausführungen verwiesen, die entsprechend gelten.

Die Umsetzung der Komponenten (i) bis (iii) kann prinzipiell unter an sich bekannten Reaktionsbedingungen durchgeführt werden. Die Umsetzung kann dabei diskontinuierlich oder auch kontinuierlich erfolgen, beispielsweise in einem Bandverfahren oder einem Reaktionsextrusionsverfahren. Geeignete Verfahren werden beispielsweise beschrieben in EP 0 922 552 A1 oder WO 2006/082183 A1.

Gemäß einer bevorzugten Ausführungsform wird die Umsetzung der Komponenten (i) bis (iii) unter erhöhten Temperaturen als Raumtemperatur durchgeführt.

Das Erwärmen kann erfindungsgemäß auf jede dem Fachmann bekannte geeignete Art erfolgen. Bevorzugt können auch die Einsatzstoffe vor der Zugabe erwärmt werden, beispielsweise unter Verwendung von beheizbaren Dosiereinheiten.

Dabei wird beispielsweise bei einer Umsetzung mittels Reaktionsextrusionsverfahren die Reaktion derart geführt, dass die Zonentemperatur im Bereich von 170 °C bis 245 °C liegt, bevorzugt im Bereich von 180 °C bis 235 °C, weiter bevorzugt im Bereich von 190 °C bis 230 °C.

Demgemäß betrifft die vorliegende Erfindung gemäß einer weiteren Ausführungsform auch ein Verfahren zur Herstellung eines thermoplastischen Polyurethans wie zuvor beschrieben, wobei die Umsetzung mittels eines Reaktionsextrusionsverfahrens erfolgt und die Zonentemperatur im Bereich von 170 °C bis 245 °C liegt.

Erfindungsgemäß ist es auch möglich, dass das Verfahren weitere Schritte umfasst, beispielsweise eine Vorbehandlung der Komponenten oder eine Nachbehandlung des erhaltenen thermoplastischen Polyurethans. Demgemäß betrifft die vorliegende Erfindung gemäß einer weiteren Ausführungsform auch ein Verfahren zur Herstellung eines thermoplastischen Polyurethans wie zuvor beschrieben, wobei nach der Umsetzung das erhaltene thermoplastische Polyurethan getempert wird.

Das erfindungsgemäße thermoplastische Polyurethan bzw. ein nach einem erfindungsgemäßen Verfahren erhaltenes oder erhältliches thermoplastisches Polyurethan kann vielseitig verwendet werden. Insbesondere sind die erfindungsgemäßen thermoplastischen Polyurethane für die Herstellung von Formteilen und Folien geeignet. Mögliche Anwendungen sind beispielsweise Dichtungen, Dichtungsringe, Dichtplatte, Dichtscheiben, Dichtungsmittel, Dichtmasse, Abdichtmittel oder Schuhaußensohlen. Weitere Anwendungen sind beispielsweise Schläuche für u.a. pneumatische Anwendungen, Förderbänder, Folien, Verpackungsmaterial, Kabel, Fußbodenanwendungen, Schock- und Geräuschabsorber.

Gemäß einem weiteren Aspekt betrifft die vorliegende Erfindung auch die Verwendung eines thermoplastischen Polyurethans wie zuvor beschrieben oder eines thermoplastischen Polyurethans erhältlich oder erhalten nach einem erfindungsgemäßen Verfahren zur Herstellung von Extrusionsprodukten, Filmen und Formkörpern, insbesondere zur Herstellung von Kabelummantelungen, Schläuchen und Dichtungen.

Gemäß einer weiteren Ausführungsform betrifft die vorliegenden Erfindung auch die Verwendung eines thermoplastischen Polyurethans wie zuvor beschrieben oder eines thermoplastischen Polyurethans erhältlich oder erhalten nach einem erfindungsgemäßen Verfahren zur Herstellung von Extrusionsprodukten, Filmen und Formkörpern, wobei das Extrusionsprodukt, der Film oder die Folie mit Füllstoffen verstärkt ist.

Überraschender Weise hat sich gezeigt, dass die erfindungsgemäßen thermoplastischen Polyurethane bzw. die nach einem erfindungsgemäßen Verfahren erhaltenen thermoplastischen Polyurethane gut für die Herstellung von geschäumten Materialien geeignet sind. Dabei können die erfindungsgemäßen thermoplastischen Polyurethane in an sich bekannter Weise zu geschäumten Materialien verarbeitete werden. Dabei werden gegebenenfalls Zusatzstoffe wie Treibmittel, Zellreglern, oberflächenaktiven Substanzen, Nukleationsmittel, Füllstoffen, Mikrohohlkugeln und/oder Trennmittel eingesetzt. Geeignete Verfahren und Zusatzstoffe sind beispielsweise in der WO2014/198779 A1, in WO 2007/082838 A1 oder WO 94/20568 A1 offenbart.

Somit betrifft die vorliegende Erfindung gemäß einem weiteren Aspekt auch die Verwendung eines thermoplastischen Polyurethans wie zuvor beschrieben oder eines thermoplastischen Polyurethans erhältlich oder erhalten nach einem erfindungsgemäßen Verfahren zur Herstellung von geschäumten Folien, geschäumten Formteilen oder geschäumten Partikeln sowie den daraus erhältlichen Partikelschäumen.

Gemäß einer weiteren Ausführungsform betrifft die vorliegende Erfindung auch die Verwendung eines thermoplastischen Polyurethans wie zuvor beschrieben oder eines thermoplastischen Polyurethans erhältlich oder erhalten nach einem erfindungsgemäßen Verfahren zur Herstellung von geschäumten Folien, geschäumten Formteilen oder geschäumten Partikeln sowie den daraus erhältlichen Partikelschäumen, wobei die geschäumten Folien, geschäumten Formteile oder geschäumten Partikel und daraus erhältlichen Partikelschäume mit Füllstoffen verstärkt sind.

In einer bevorzugten Ausführungsform wird die Kettenverlängerermischung so gewählt, dass das TPU einen Erweichungspunkt kleiner als 190 °C bevorzugt kleiner 160°C °C und ganz bevorzugt kleiner 150°C aufweist.

Die Erweichungstemperatur wurde mittels DMA (gemessen an einer 2 mm, für 20 h bei 100 °C getemperten Spritzgussplatte in Anlehnung an DIN EN ISO 6721-1:2011, mit einer Frequenz von 1 Hz und einer Heizrate von 20 K/min gemessen von - 80 °C bis 200 °C, bestimmt.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1 Folgende Einsatzstoffe wurden eingesetzt:

| | |
|---|---|
| PTHF 1000: | Polytetramethylenoxid (PTHF) Mw 1000 g/mol |
| PTHF 650: | Polytetramethylenoxid (PTHF) Mw 650 g/mol |
| PTHF 2000: | Polytetramethylenoxid (PTHF) Mw 2000 g/mol |
| HQEE: | Hydroquinonebis(2-hydroxyethyl)ether |
| 4,4'-MDI: | 4,4'-Diphenylmethandiisocyanat |
| Lupranat MI: | Mischung von 4,4'-Diphenylmethandiisocyanat und 2,4'-MDI (2,4'-Diphenylmethandiisocyanat) |
| TODI: | 3,3,'-Dimethyl-4,4'-Diisocyanato-diphenyl |
| HER: | Resorcinol bis(2-hydroxyethyl)ether |
| 1,4-Butandiol | |
| Irganox | 1010 FF (CAS Nr. 6683-19-8) und 1098 (CAS Nr. 23128-74-7) |

### 2 Synthese der Polyurethane

### 2.1 Polyurethan auf Basis von HQEE, 4,4-MDI und PTHF (Vergleichsbeispiel)

In einer 2 Liter Weißblechdose wurden 800,00g PolyTHF1000 zusammen mit 238,84g HQEE eingewogen und kurz mit Stickstoff beschleiert. Die Dose wurde mit einem geeigneten Deckel verschlossen und im Heizschrank auf ca. 120°C aufgeheizt.

Die flüssigen Komponenten in der Dose wurden auf einer Hebebühne mittels Propellerrührer gemischt. Anschließend wurden 7,81g Irganox 1010 FF und 7,81g Irganox 1098 hinzugegeben und verrührt.

Die Temperatur der Mischung wurde vorsichtig mit einem Heißluftfön auf 108°C eingestellt. Bei 108°C erfolgte die Zugabe von 505,1g 4,4'-MDI. Das MDI hatte eine Temperatur von 45°C. Eine Durchmischung erfolgte mittels Propellerrührer 200u/min. Bei Erreichen von 110°C wurde die Reaktionsmischung in eine Teflonschale gegossen. Die Teflonschale befand sich auf einem Heiztisch mit 125°C.

Nach 10min wurde die feste Schwarte vom Heiztisch genommen und anschließend für 24h im Heizschrank bei 80°C getempert. Die ausgekühlte Schwarte wurde in einer Schneidmühle zerkleinert. Das entstandene Granulat wurde für 3h bei 110°C getrocknet. Mittels Spritzgussverfahren wurden 2mm und 6mm Prüfkörper hergestellt.

### 2.2 Polyurethan auf Basis von HQEE und einer 2,4' und 4,4'-MDI Mischung (Beispiel 1)

In einer 2 Liter Weißblechdose wurden 800,00g PolyTHF1000 zusammen mit 238,84g HQEE eingewogen und kurz mit Stickstoff beschleiert. Die Dose wurde mit einem geeigneten Deckel verschlossen und im Heizschrank auf ca. 120°C aufgeheizt.

Die flüssigen Komponenten in der Dose wurden auf einer Hebebühne mittels Propellerrührer gemischt. Anschließend wurden 7,80g Irganox 1010 FF und 7,80g Irganox 1098 hinzugegeben und verrührt.

Die Temperatur der Mischung wurde vorsichtig mit einem Heißluftfön auf 108°C eingestellt. Bei 108°C erfolgte die Zugabe von 479,84g 4,4'-MDI und 25,26g Lupranat MI. Die beiden Isocyanatvarianten hatten eine Temperatur von 45°C. Eine Durchmischung erfolgte mittels Propellerrührer 200u/min. Bei Erreichen von 110°C wurde die Reaktionsmischung in eine Teflonschale gegossen. Die Teflonschale befand sich auf einem Heiztisch mit 125°C.

Nach 10min wurde die feste Schwarte vom Heiztisch genommen und anschließend für 24h im Heizschrank bei 80°C getempert. Die ausgekühlte Schwarte wurde in einer Schneidmühle zerkleinert. Das entstandene Granulat wurde für 3h bei 110°C getrocknet. Mittels Spritzgussverfahren wurden 2mm und 6mm Prüfkörper hergestellt.

### 2.3 Beispiel 2

Die Herstellung erfolgte nach dem gleichen Herstellungsverfahren wie bezüglich des Beispiels 1 beschrieben, es wurde jedoch 10% Lupranat MI verwendet. Die Einsatzstoffe sind in Tabelle 1 zusammengefasst.

### 2.4 Beispiel 3

Die Herstellung erfolgte nach dem gleichen Herstellungsverfahren wie bezüglich des Beispiels 1 beschrieben, wurde jedoch 20% Lupranat MI verwendet. Die Einsatzstoffe sind in Tabelle 1 zusammengefasst.

### 2.5 Beispiel 4

Die Herstellung erfolgte nach dem gleichen Herstellungsverfahren wie bezüglich des Beispiels 1 beschrieben, es wurde jedoch 50% Lupranat MI verwendet. Die Einsatzstoffe sind in Tabelle 1 zusammengefasst.

**Tabelle 1: eingesetzte Verbindungen**

| | Beispiel 2 | Beispiel 3 | Beispiel 4 |
|---|---|---|---|
| PolyTHF 1000 | 800,00 g | 800,00 g | 800,00 g |
| | | | |
| HQEE | 238,84 g | 238,84 g | 238,84 g |
| | | | |
| 4,4'-MDI | 454,59 g | 404,08 g | 252,55 g |
| Lupranat MI | 50,51 g | 101,02 g | 252,55 g |
| | | | |
| Irganox 1010 FF | 7,80 g | 7,80 g | 7,80 g |
| Irganox 1098 | 7,80 g | 7,80 g | 7,80 g |

### 3 Mechanische Eigenschaften

Die in Tabelle 2a und 2b zusammengestellten Messwerte wurden von Spritzgussplatten bzw. von Extrusionsprodukten der erhaltenen Polyurethane erstellt.

**Tabelle 2a: Mechanische Eigenschaften**

| | Shore-Härte | | Zugfestigkeit | | Reißdehnung | |
|---|---|---|---|---|---|---|
| | | | RT | 80°C | RT | 80°C |
| LJ-Nummer | [Shore A] | [Shore D] | [MPa] | [MPa] | [%] | [%] |
| Beispiel 1 | 95 | 52 | 37 | 17 | 480 | 620 |
| Beispiel 2 | 94 | 51 | 35 | 15 | 410 | 550 |
| Beispiel 3 | 94 | 50 | 34 | 15 | 410 | 490 |
| Beispiel 4 | 92 | 46 | 34 | 11 | 470 | 570 |
| Vergleichsbeispiel 1 | 95 | 52 | 34 | 18 | 480 | 640 |

**Tabelle 2b: Mechanische Eigenschaften**

| | Weiterreiß widerstand | Abrieb | Dichte | Druckverformungsrest | | |
|---|---|---|---|---|---|---|
| | | | | 72h/23°C /30mi) | 24h/70°C /30min | (24h/100° C/30min |
| LJ-Nummer | [N/mm] | [mm³] | [g/cm³] | [%] | [%] | [%] |
| Beispiel 1 | 92 | 60 | 1,142 | 19 | 32 | 52 |
| Beispiel 2 | 89 | 65 | 1,142 | 20 | 32 | 51 |
| Beispiel 3 | 89 | 69 | 1,141 | 12 | 32 | 55 |
| Beispiel 4 | 84 | 61 | 1,139 | 23 | 36 | 55 |
| Vergleichsbeispiel 1 | 88 | 61 | 1,144 | 22 | 30 | 43 |

Die folgenden Eigenschaften der erhaltenen Polyurethane wurden nach den genannten Verfahren bestimmt:

| | |
|---|---|
| Härte: | DIN ISO 7619-1 |
| Zugfestigkeit und Reißdehnung: | DIN 53504 |
| Weiterreißwiderstand: | DIN ISO 34-1, B (b) |
| Abriebmessung: | DIN ISO 4649 |
| Dichte: | DIN EN ISO 1183-1, A |
| Druckverformungsrests | DIN ISO 815 |

### Zitierte Literatur

WO 2006/082183 A1
EP 0 922 552 A1
WO 98/56845
"Kunststoffhandbuch, Band 7, Polyurethane", Carl Hanser Verlag, 3. Auflage 1993, Kapitel 3.1 WO 2007/118827 A1
EP 0 922 552 A1
WO 2006/082183 A1
WO2014/198779 A1
WO 2007/082838 A1
WO 94/20568 A1

## Patentansprüche

1. Thermoplastisches Polyurethan erhältlich oder erhalten durch Umsetzung mindestens der Komponenten (i) bis (iii):
(i) mindestens eine Polyisocyanatzusammensetzung;
(ii) mindestens ein Kettenverlängerer (KV1) der allgemeinen Formel (I), 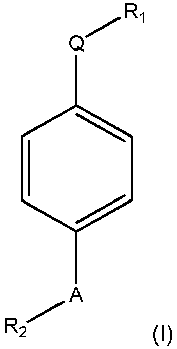 wobei A ausgewählt ist aus O, N(R3), S, CH₂,
Q ausgewählt ist aus O, N(R3), S, CH₂,
R1 ausgewählt ist aus CH₂-(CH₂)ₙ-OH, CH(CH₃)-CH₂-OH, OH,
R2 ausgewählt ist aus CH₂-(CH₂)ₙ-OH, CH(CH₃)-CH₂-OH, CH₂-CH(CH₃)-OH, OH,
n ist 0, 1, 2, 3, 4, 5, oder 6,
R3 ausgewählt ist aus CH₃, CH₂-CH₃,
und A und Q nicht gleichzeitig CH₂ sind,
(iii) mindestens eine Polyolzusammensetzung,
wobei die Polyisocyanatzusammensetzung 4,4'-Diphenylmethandiisocyanat (4,4'-MDI) und mindestens ein weiteres Polyisocyanat enthält,
wobei die Polyolzusammensetzung ein Polyol ausgewählt aus der Gruppe bestehend aus Polytetrahydrofuranen mit einem zahlenmittleren Molekulargewicht Mn im Bereich von 500 g/mol bis 5000 g/mol enthält.

2. Das thermoplastische Polyurethan gemäß Anspruch 1, wobei der Kettenverlängerer (KV1) der allgemeinen Formel (I) Hydroquinone bis(2-hydroxyethyl)ether ist.

3. Das thermoplastische Polyurethan gemäß Anspruch 1 oder 2, wobei mindestens ein weiterer Kettenverlängerer (KV2) eingesetzt wird, ausgewählt aus der Gruppe bestehend aus aliphatischen und aromatischen Diolen mit einem Molekulargewicht von <350 g/mol.

4. Das thermoplastische Polyurethan gemäß einem der Ansprüche 1 bis 3, wobei die Polyolzusammensetzung ein Polyol ausgewählt aus der Gruppe bestehend aus Polyethern, Polyestern, Polycaprolactonen und Polycarbonaten enthält.

5. Das thermoplastische Polyurethan gemäß einem der Ansprüche 1 bis 4, wobei die Polyolzusammensetzung ein Polyol (P1) ausgewählt aus der Gruppe bestehend aus Polytetrahydrofuranen mit einem zahlenmittleren Molekulargewicht Mn im Bereich von 1501 g/mol bis 3000 g/mol enthält und ein Polyol (P2) ausgewählt aus der Gruppe bestehend aus Polytetrahydrofuranen mit einem zahlenmittleren Molekulargewicht Mn im Bereich von 500 g/mol bis 1500g/mol.

6. Das thermoplastische Polyurethan gemäß einem der Ansprüche 1 bis 5, wobei die Polyisocyanatzusammensetzung eine Mischung aus ,4'-Diphenylmethandiisocyanat (4,4'-MDI) und 2,4'-Diphenylmethandiisocyanat (2,4'-MDI) enthält.

7. Verfahren zur Herstellung eines thermoplastischen Polyurethans, umfassend die Umsetzung mindestens der Komponenten (i) bis (iii):
(i) mindestens eine Polyisocyanatzusammensetzung;
(ii) mindestens ein Kettenverlängerer (KV1) der allgemeinen Formel (I), 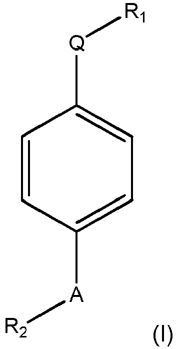 wobei A ausgewählt ist aus O, N(R3), S, CH₂,
Q ausgewählt ist aus O, N(R3), S, CH₂,
R1 ausgewählt ist aus CH₂-(CH₂)ₙ-OH, CH(CH₃)-CH₂-OH, OH,
R2 ausgewählt ist aus CH₂-(CH₂)ₙ-OH, CH(CH₃)-CH₂-OH, CH₂-CH(CH₃)-OH, OH,
n ist 0, 1, 2, 3, 4, 5, oder 6,
R3 ausgewählt ist aus CH₃, CH₂-CH₃,
und A und Q nicht gleichzeitig CH₂ sind,
(iii) mindestens eine Polyolzusammensetzung,
wobei die Polyisocyanatzusammensetzung 4,4'-Diphenylmethandiisocyanat (4,4'-MDI) und mindestens ein weiteres Polyisocyanat enthält,
wobei die Polyolzusammensetzung ein Polyol ausgewählt aus der Gruppe bestehend aus Polytetrahydrofuranen mit einem zahlenmittleren Molekulargewicht Mn im Bereich von 500 g/mol bis 5000 g/mol enthält.

8. Verwendung eines thermoplastischen Polyurethans gemäß einem der Ansprüche 1 bis 6 oder eines thermoplastischen Polyurethans erhältlich oder erhalten nach einem Verfahren gemäß Anspruch 7 zur Herstellung von Extrusionsprodukten, Filmen und Formkörpern, insbesondere zur Herstellung von Kabelummantelungen, Schläuchen und Dichtungen.

9. Verwendung gemäß Anspruch 8, wobei das Extrusionsprodukt, der Film oder die Folie mit Füllstoffen verstärkt ist.

10. Verwendung eines thermoplastischen Polyurethans gemäß einem der Ansprüche 1 bis 6 oder eines thermoplastischen Polyurethans erhältlich oder erhalten nach einem Verfahren gemäß Anspruch 7 zur Herstellung von geschäumten Folien, geschäumten Formteilen oder geschäumten Partikeln und daraus erhältlichen Partikelschäumen.

11. Verwendung gemäß Anspruch 10, wobei die geschäumten Folien, geschäumten Formteile oder geschäumten Partikel und daraus erhältlichen Partikelschäume mit Füllstoffen verstärkt sind.

## Claims

1. A thermoplastic polyurethane obtainable or obtained by reaction of at least the components (i) to (iii):
(i) at least one polyisocyanate composition;
(ii) at least one chain extender (KV1) of general formula (I), 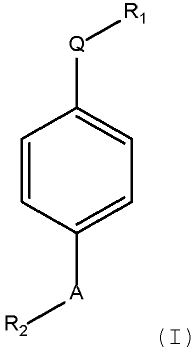 wherein A is selected from O, N(R3), S, CH₂,
Q is selected from O, N(R3), S, CH₂,
R1 is selected from CH₂-(CH₂)ₙ-OH, CH(CH₃)-CH₂-OH, OH,
R2 is selected from CH₂-(CH₂)ₙ-OH, CH(CH₃)-CH₂-OH, CH₂-CH(CH₃)-OH, OH,
n is 0, 1, 2, 3, 4, 5 or 6,
R3 is selected from CH₃, CH₂-CH₃,
and A and Q are not simultaneously CH₂,
(iii) at least one polyol composition,
wherein the polyisocyanate composition comprises 4,4'-diphenylmethane diisocyanate (4,4'-MDI) and at least one further polyisocyanate,
wherein the polyol composition comprises a polyol selected from the group consisting of polytetrahydrofurans having a number-average molecular weight Mn in the range from 500 g/mol to 5000 g/mol.

2. The thermoplastic polyurethane according to claim 1, wherein the chain extender (KV1) of general formula (I) is hydroquinone bis(2-hydroxyethyl)ether.

3. The thermoplastic polyurethane according to claim 1 or 2, wherein at least one further chain extender (KV2) selected from the group consisting of aliphatic and aromatic diols having a molecular weight of <350 g/mol is employed.

4. The thermoplastic polyurethane according to any of claims 1 to 3, wherein the polyol composition comprises a polyol selected from the group consisting of polyethers, polyesters, polycaprolactones and polycarbonates.

5. The thermoplastic polyurethane according to any of claims 1 to 4, wherein the polyol composition comprises a polyol (P1) selected from the group consisting of polytetrahydrofurans having a number-average molecular weight Mn in the range from 1501 g/mol to 3000 g/mol and a polyol (P2) selected from the group consisting of polytetrahydrofurans having a number-average molecular weight Mn in the range from 500 g/mol to 1500 g/mol.

6. The thermoplastic polyurethane according to any of claims 1 to 5, wherein the polyisocyanate composition comprises a mixture of ,4'-diphenylmethane diisocyanate (4,4'-MDI) and 2,4'-diphenylmethane diisocyanate (2,4'-MDI).

7. A process for producing a thermoplastic polyurethane comprising the reaction of at least the components (i) to (iii):
(i) at least one polyisocyanate composition;
(ii) at least one chain extender (KV1) of general formula (I), 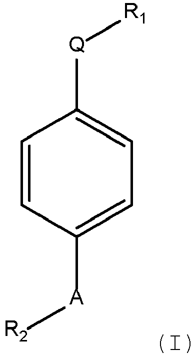 wherein A is selected from O, N(R3), S, CH₂,
Q is selected from O, N(R3), S, CH₂,
R1 is selected from CH₂-(CH₂)ₙ-OH, CH(CH₃)-CH₂-OH, OH,
R2 is selected from CH₂-(CH₂)ₙ-OH, CH(CH₃)-CH₂-OH, CH₂-CH(CH₃)-OH, OH,
n is 0, 1, 2, 3, 4, 5 or 6,
R3 is selected from CH₃, CH₂-CH₃,
and A and Q are not simultaneously CH₂,
(iii) at least one polyol composition,
wherein the polyisocyanate composition comprises 4,4'-diphenylmethane diisocyanate (4,4'-MDI) and at least one further polyisocyanate,
wherein the polyol composition comprises a polyol selected from the group consisting of polytetrahydrofurans having a number-average molecular weight Mn in the range from 500 g/mol to 5000 g/mol.

8. The use of a thermoplastic polyurethane according to any of claims 1 to 6 or of a thermoplastic polyurethane obtainable or obtained by a process according to claim 7 for producing extrusion products, films and molded articles, in particular for producing cable sheathings, hoses and seals.

9. The use according to claim 8, wherein the extrusion product, the film or the foil is reinforced with fillers.

10. The use of a thermoplastic polyurethane according to any of claims 1 to 6 or of a thermoplastic polyurethane obtainable or obtained by a process according to claim 7 for producing foamed films, foamed moldings or foamed particles and particle foams obtainable therefrom.

11. The use according to claim 10, wherein the foamed films, foamed moldings or foamed particles and particle foams obtainable therefrom are reinforced with fillers.

## Revendications

1. Polyuréthane thermoplastique pouvant être obtenu ou obtenu par transformation d'au moins les composants (i) à (iii) :
(i) au moins une composition de polyisocyanate ;
(ii) au moins un extenseur de chaînes (KV1) de formule générale (I) 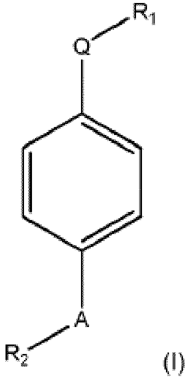
A étant choisi parmi O, N(R3), S, CH₂,
Q étant choisi parmi O, N(R3), S, CH₂,
R1 étant choisi parmi CH₂-(CH₂)ₙ-OH, CH(CH₃)-CH₂-OH, OH,
R2 étant choisi parmi CH₂-(CH₂)ₙ-OH, CH(CH₃)-CH₂-OH, CH₂-CH(CH₃)-OH, OH,
n étant O, 1, 2, 3, 4, 5, ou 6,
R3 étant choisi parmi CH₃, CH₂-CH₃,
et A et Q n'étant pas simultanément CH₂,
(iii) au moins une composition de polyol,
la composition de polyisocyanate contenant du 4,4'-diisocyanate de diphénylméthane (4,4'-MDI) et au moins un autre polyisocyanate,
la composition de polyol contenant un polyol choisi dans le groupe constitué par des polytétrahydrofurannes dotés d'un poids moléculaire moyen en nombre Mn dans la plage de 500 g/mole à 5 000 g/mole.

2. Polyuréthane thermoplastique selon la revendication 1, l'extenseur de chaînes (KV1) de formule générale (I) étant le bis(2-hydroxyéthyl)éther d'hydroquinone.

3. Polyuréthane thermoplastique selon la revendication 1 ou 2, au moins un autre extenseur de chaînes (KV2) étant utilisé, lequel est choisi dans le groupe constitué par des diols aliphatiques et aromatiques dotés d'un poids moléculaire de < 350 g/mole.

4. Polyuréthane thermoplastique selon l'une quelconque des revendications 1 à 3, la composition de polyol contenant un polyol choisi dans le groupe constitué par des polyéthers, des polyesters, des polycaprolactones et des polycarbonates.

5. Polyuréthane thermoplastique selon l'une quelconque des revendications 1 à 4, la composition de polyol contenant un polyol (P1) choisi dans le groupe constitué par des polytétrahydrofurannes dotés d'un poids moléculaire moyen en nombre Mn dans la plage de 1 501 g/mole à 3 000 g/mole et un polyol (P2) choisi dans le groupe constitué par des polytétrahydrofurannes dotés d'un poids moléculaire moyen en nombre Mn dans la plage de 500 g/mole à 1 500 g/mole.

6. Polyuréthane thermoplastique selon l'une quelconque des revendications 1 à 5, la composition de polyisocyanate contenant un mélange de ,4'-diisocyanate de diphénylméthane (4,4'-MDI) et de 2,4'-diisocyanate de diphénylméthane (2,4'-MDI).

7. Procédé pour la préparation d'un polyuréthane thermoplastique, comprenant la transformation d'au moins les composants (i) à (iii) :
(i) au moins une composition de polyisocyanate ;
(ii) au moins un extenseur de chaînes (KV1) de formule générale (I) 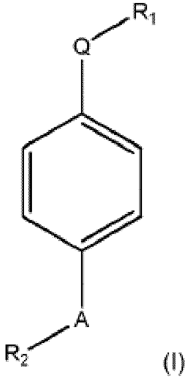
A étant choisi parmi O, N(R3), S, CH₂,
Q étant choisi parmi O, N(R3), S, CH₂,
R1 étant choisi parmi CH₂-(CH₂)ₙ-OH, CH(CH₃)-CH₂-OH, OH,
R2 étant choisi parmi CH₂-(CH₂)ₙ-OH, CH(CH₃)-CH₂-OH, CH₂-CH(CH₃)-OH, OH,
n étant O, 1, 2, 3, 4, 5, ou 6,
R3 étant choisi parmi CH₃, CH₂-CH₃,
et A et Q n'étant pas simultanément CH₂,
(iii) au moins une composition de polyol,
la composition de polyisocyanate contenant du 4,4'-diisocyanate de diphénylméthane (4,4'-MDI) et au moins un autre polyisocyanate,
la composition de polyol contenant un polyol choisi dans le groupe constitué par des polytétrahydrofurannes dotés d'un poids moléculaire moyen en nombre Mn dans la plage de 500 g/mole à 5 000 g/mole.

8. Utilisation d'un polyuréthane thermoplastique selon l'une quelconque des revendications 1 à 6 ou d'un polyuréthane thermoplastique pouvant être obtenu ou obtenu par un procédé selon la revendication 7 pour la préparation de produits d'extrusion, de films et de corps moulés, en particulier pour la préparation de gaines de câbles, de tubes et de joints d'étanchéité.

9. Utilisation selon la revendication 8, le produit d'extrusion, le film ou la feuille étant renforcé(e) par des charges.

10. Utilisation d'un polyuréthane thermoplastique selon l'une quelconque des revendications 1 à 6 ou d'un polyuréthane thermoplastique pouvant être obtenu ou obtenu par un procédé selon la revendication 7 pour la préparation de feuilles moussées, de pièces moulées moussées ou de particules moussées et de mousses à particules pouvant être obtenues à partir de celles-ci.

11. Utilisation selon la revendication 10, les feuilles moussées, les pièces moulées moussées ou les particules moussées et les mousses à particules pouvant être obtenues à partir de celles-ci étant renforcées par des charges.
